# EUROPEAN PATENT SPECIFICATION

(11) **EP 0 430 379 B1**
(45) Date of publication and mention of the grant of the patent: **15.09.1993**
(21) Application number: 90203205.1
(22) Date of filing: 08.07.1988
(51) Int. Cl.: B01J 19/00, C01B 3/38, B01J 8/06

(54) **Chemical reactor**
Chemischer Reaktor
Réacteur chimique

(30) Priority: 10.07.1987 JP 172614/87; 10.07.1987 JP 172615/87
(43) Date of publication of application: 05.06.1991
(62) Divisional of application: 88306274.7
(73) Proprietor: TOKYO INSTITUTE OF TECHNOLOGY, Tokyo 152 (JP); ISHIKAWAJIMA-HARIMA JUKOGYO KABUSHIKI KAISHA, Chiyoda-ku Tokyo 100 (JP); KABUSHIKI KAISHA KOBE SEIKO SHO, Kobe 651 (JP); CHIYODA CORPORATION, Yokohama 230 (JP); KABUSHIKI KAISHA TOSHIBA, Kawasaki-shi, Kanagawa-ken 210 (JP); Ryoka Techno Engineering & Construction Co., Shibuya-ku Tokyo 151 (JP); MITSUBISHI JUKOGYO KABUSHIKI KAISHA, Tokyo 100 (JP); MITSUBISHI PETROCHEMICAL ENGINEERING CO., LTD., Chou-ku, Tokyo 103 (JP)
(72) Inventor: Echigo, Ryozo, Tokyo (JP); Yoshizawa, Yoshio, Tokyo (JP); Ikeda, Mikio, Matsudo-shi, Chiba-ken (JP); Aoki, Mamoru, Kobe-shi, Hyogo-ken (JP); Shimizu, Ryosuke, Yokohama-shi, Kanagawa-ken (JP); Onomura, Masaki, Tokyo (JP); Iwasa, Koichi, Matsudo-shi, Chiba-ken (JP); Ide, Yuichi, Nagasaki-shi, Nagasaki-ken (JP); Yamana, Noboru, Kashima-gun, Ibaraki-ken (JP)
(74) Representative: Jennings, Nigel Robin

(56) References cited:
- WO-A-86/02016
- FR-A- 1 327 210
- US-A- 4 714 593

## Description

The present invention relates to a chemical reactor which utilises heat to effect the decomposition of a raw gas mixture and is concerned with that type of reactor which has two chambers separated by a partition wall, a porous heat radiating body being disposed in one of the chambers and a porous heat-receiving body in which a catalyst is dispersed being disposed in the other chamber whereby, in use, the heat radiating body is heated by high temperature combustion gas flowing through it and transmits heat to the heat-receiving body which heats a raw gas mixture flowing through it and causes it to react.

It is known to use such a chemical reactor in the production of hydrogen gas, by subjecting a raw gas mixture comprising CH₄ and H₂O to a steam-reforming reaction represented by CH₄ + H₂O → CO + 3H₂, thereby obtaining a generated gas mixture comprising H₂ and CO.

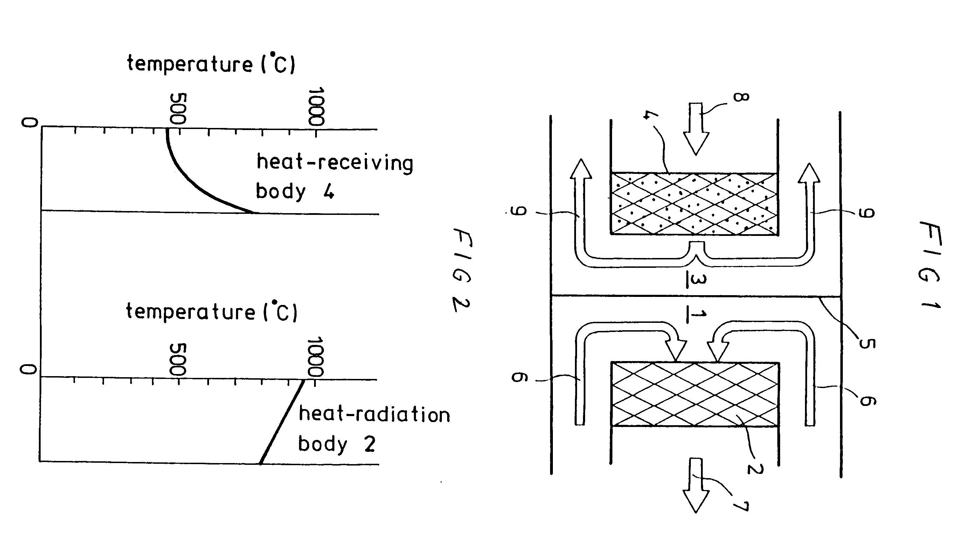

A known reactor of the type referred to above is illustrated diagrammatically in Figure 1. This reactor comprises a combustion chamber 1 which accommodates a porous heat radiation body 2 and a heat-receiving chamber 3 which accommodates a porous heat-receiving body 4 which carries catalysts uniformly distributed throughout the body and whose pores are of substantially the same diameter throughout. The chambers 1 and 3 are separated by a partition wall 5 to prevent gas leakage between them.

In use, a high-temperature combustion gas 6 obtained by combustion of a fuel flows through the heat radiation body 2 and is then discharged as an exhaust gas 7. The combustion gas 6 has sensible heat which is absorbed by convection heat transfer by the heat radiation body 2 during its passage through it so that the heat radiation body 2 is heated and emits radiant heat. The radiant heat emitted by the body 2 is received by the heat-receiving body 4 in the form of re-radiated heat from the partition wall 5, if the wall 5 is made of metal or ceramic material or by way of transmission through the wall 5 if the wall 5 is made of transparent material such as quartz glass, whereby the heat-receiving body 4 is heated.

A raw gas mixture 8 comprising CH₄ and H₂O passes through the heat-receiving body 4 and is heated and decomposed thereby to produce a generated gas mixture 9 comprising H₂ and CO which is discharged out of the chemical reactor.

The raw gas mixture 8 is thus caused to decompose in the presence of catalysts by the heat of the body 4 which has been radiated to it by the body 2 to obtain the generated gas mixture 9. Thus, an effective utilisation of heat is achieved and the apparatus for decomposing the raw gas mixture is relatively compact.

Figure 2 shows the temperature distributions in the heat radiation body 2 and the heat-receiving body 4 in the chemical reactor described above in the directions of the gas flows. Whereas the temperature gradient in the heat radiation body 2 is substantially linear, the temperature gradient in the heat-receiving body 4 is curved and concave downwardly. Thus as may be seen, in the conventional chemical reactor, the temperature decreases linearly through the heat radiation body but increases non-linearly at an ever increasing rate in the heat-receiving body 4. Thus the temperature is relatively low in the vicinity of the inlet of the body 4 and suddenly rises towards the outlet of the body 4. In this connection, it is to be noted that the steam-reforming reaction is endothermic and proceeds slowly at low temperatures and is accelerated with an increase in temperature.

Thus, the steam-reforming reaction does not occur to a significant extent at the low temperature side of the heat-receiving body 4 and mainly occurs at the high temperature side thereof. This means that the absorption of heat by the heat-receiving body 4 occurs at the portion thereof closest to the heat radiation body 2 and effective utilisation of the catalysts is not achieved at the low-temperture portion furthest from the heat radiation body 2.

The distribution of the catalyst, which is extremely expensive, throughout the heat-receiving body 4 including its low-temperature portions is therefore wasteful and largely pointless and results in an increase of the capital, operating and maintenance costs.

It is thus an object of the present invention to achieve an effective utilisation of the catalyst material by ensuring that the previously low-temperature portion of the heat-receiving body becomes a high temperature portion.

A further object of the present invention is to reduce the amount of the expensive catalyst material which is necessary so as to reduce the capital, operational and maintenance costs of the reactor.

According to the present invention the downstream portion of the heat-receiving body in the direction of flow of the raw gas mixture contains catalyst material dispersed therein and the upstream portion thereof contains no catalyst material. In this embodiment the raw gas mixture is initially only heated as it passes through the heat-receiving body and the reaction or decomposition of this mixture then proceeds very rapidly and effectively once it reaches that portion of the heat-receiving body which contains catalyst material. It will be appreciated that this embodiment enables less catalyst material to be used. It is preferred that the heat-receiving body is divided into two or more layers in the direction of flow of the raw gas mixture through it, that at least the layer at the downstream end of the body has a catalyst dispersed therein and that at least the layer in the upstream end of the body has no catalyst therein. If the heat-receiving body has only two layers then the downstream layer will have catalyst in it and the upstream layer no catalyst but if there are three layers it is preferred that both the upstream layers have no catalyst in them.

Further features and details of the invention will be apparent from the following description of certain specific embodiments which is given by way of example with reference to Figures 3 to 5 of the accompanying drawings, in which:-
Figure 3 is a view similar to Figure 1 of a chemical reactor in accordance with the present invention;
Figure 4 is a graph illustrating the temperature distribution curves in the directions of the gas flows in the heat radiation body and the heat receiving body in the chemical reactor shown in Figure 3; and
Figure 5 is a diagrammatic view of a practical application of a chemical reactor in accordance with the present invention.

The same reference numerals are used to designate similar parts throughout the Figures.

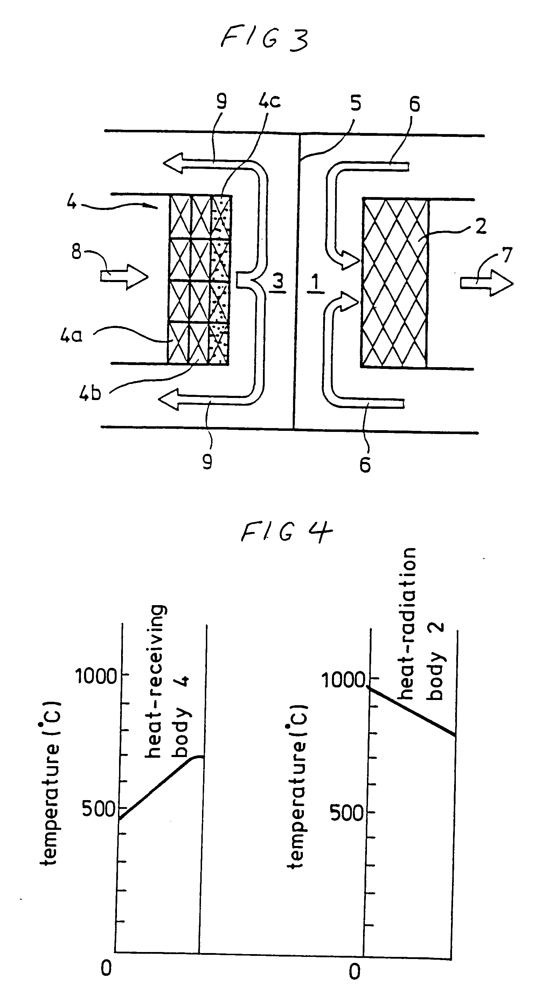

Referring to Figure 3 the porous heat-receiving body 4 has pores of substantially the same diameter throughout and is divided into a plurality, in this case three, heat-receiving layers 4a, 4b and 4c in that order in the direction of the gas flow passing through it. Only the layer 4c nearest to the heat radiation body 2 has catalysts in it while the remaining heat-receiving layers 4a and 4b have no catalyst.

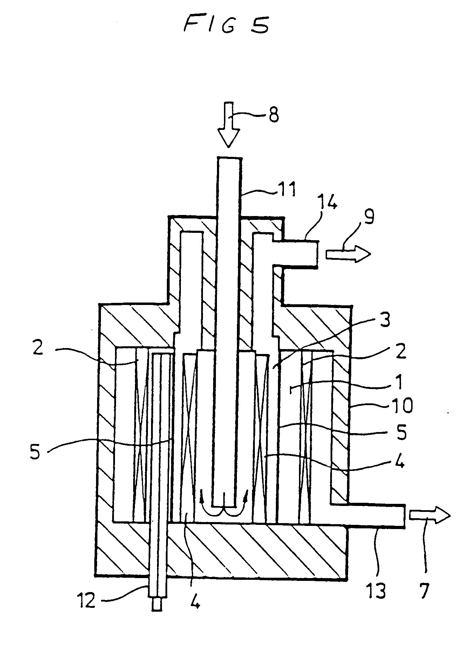

In use, the raw gas mixture 8 is heated in the layers 4a and 4b and is further heated and also decomposed in the presence of the catalysts in the layer 4c to produce the required generated gas mixture 9. In this embodiment, the layers 4a and 4b contribute only to the heating of the raw gas mixture 8. The endothermic reaction is carried out not in the layers 4a and 4b but only in the layer 4c so that the temperature distribution in the direction of the gas flow in the heat-receiving body 4 is as shown in Figure 4 and the temperature in the vicinity of the raw-gas-mixture inlet of the heat-receiving body 4 is higher than in Figure 2.

Satisfactory and effective decomposition of the raw gas mixture 8 is ensured by the catalyst material which is carried only in the layer 4c since the raw gas mixture 8 is sufficiently heated in the layers 4a and 4b by the time it reaches the layer 4c. The capital, operational and maintenance costs are thus reduced since only the layer 4c carries the catalyst.

Figure 5 shows a practical application of the present invention. A raw-gas-mixture feed pipe 11 extends centrally into a cylindrical vessel 10 with its lower end open. Cylindrical porous heat radiation and heat-receiving bodies 2 and 4 are disposed coaxially around the feed pipe 11. A cylindrical partition wall 5 is disposed between the heat radiation and heat-receiving bodies 2 and 4 to define a combustion chamber 1 between the partition wall 5 and the heat radiation body 2 and a heat-receiving chamber 3 between the partition wall 5 and the heat-receiving body 4. A burner 12 for supplying fuel and air (i.e. a combustion mixture) extends through the bottom of the cylindrical vessel 10 into the combustion chamber 1. An exhaust gas pipe 13 communuicates with the lower portion of the vessel 10 to discharge the exhaust gas 7 after it has passed through the heat radiation body 2. A generated-gas outlet pipe 14 communicates with the upper portion of the vessel 10 to discharge the generated gas mixture 9 out of the heat-receiving chamber 3. The heat-receiving body 4 is constructed as shown in Figure 3.

The combustion mixture injected from the burner 12 is burned to produce a high-temperature gas which heats the heat radiation body 2 when the gas flows through it. Radiant heat from the heat radiation body 2 heats the heat-receiving body 4 and the exhaust gas which has flowed through the heat radiation body 2 is discharged through the exhaust pipe 13 to the exterior.

The raw gas mixture 8 is fed through the feed pipe 11 centrally to the cylindrical vessel 10, heated and decomposed into the generated gas mixture 9 while flowing through the heat-receiving body 4 and is discharged through the outlet pipe 14 to the exterior.

It will be understood that the present invention is not restricted to the embodiment described above and that various modifications may be effected. For example, the raw gas mixture does not necessarily comprise CH₄ and H₂O and the CH₄ may be replaced by other endothermic reaction type gases. The catalyst-carrying heat-receiving body is not necessarily disposed in opposing relationship with the heat radiation body, but may be disposed on the side away from the heat radiation body. The raw gas mixture may also flow in a direction away from the heat radiation body.

## Claims

1. A chemical reactor having two chambers (1,3) separated by a partition wall (5), a porous heat radiating body (2) being disposed in one of the chambers (1) and a porous heat-receiving body (4) in which a catalyst is dispsersed being disposed in the other chamber (3), whereby, in use, the heat radiating body (2) is heated by high tempeature combustion gas (6) flowing through it and transmits heat to the heat-receiving body (4) which heats a raw gas mixture (8) flowing through it and causes it to react, characterised in that the downstream portion (4c) of the heat-receiving body (4) in the direction of flow of the raw gas mixture contains catalyst material dispersed therein and the upstream portion (4a,4b) thereof contains no catalyst material.

2. A reactor as claimed in claim 1 characterised in that the heat-receiving body (4) is divided into two or more layers (4a,4b,4c) in the direction of flow of the raw gas mixture through it, that at least the layer (4c) at the downstream end of the body (4) has a catalyst disposed therein and that at least the layer (4a) at the upstream end of the body (4) has no catalyst therein.

## Patentansprüche

1. Chemie-Reaktor mit zwei Kammern (1, 3), die durch eine Trennwand (5) voneinander getrennt sind, einem porösen wärmeabstrahlenden Körper (2), der in einer der Kammern (1) angebracht ist, und einem porösen wärmeempfangenden Körper (4), in dem ein Katalysator dispergiert ist, und der in der anderen Kammer (3) angebracht ist, wobei bei der Verwendung der wärmeabstrahlende Körper (2) durch ein Verbrennungsgas (6) mit hoher Temperatur, das durch ihn hindurchströmt, erhitzt wird, und Wärme an den wärmeempfangenden Körper (4) überträgt, der eine Rohgasmischung (8), die durch ihn hindurchströmt, erhitzt und zur Umsetzung veranlaßt, dadurch gekennzeichnet, daß der in Fließrichtung der Rohgasmischung stromabwärtige Teil (4c) des wärmeempfangenden Körpers (4) darin dispergiertes Katalysatormaterial enthält, und der stromaufwärtige Teil (4a, 4b) davon kein Katalysatormaterial enthält.

2. Chemie-Reaktor nach Anspruch 1, dadurch gekennzeichnet, daß der wärmeempfangende Körper (4) in der Richtung, in der die Rohgasmischung durch ihn hindurchfließt, in zwei oder mehrere Schichten (4a, 4b, 4c) unterteilt ist, wobei mindestens die Schicht (4c) am stromabwärtigen Ende des Körpers (4) einen Katalysator enthält, und mindestens die Schicht (4a) am stromaufwärtigen Ende des Körpers (4) keinen Katalysator enthält.

## Revendications

1. Un réacteur chimique qui possède deux chambres (1, 3) séparées par une paroi d'étanchéité (5), un corps poreux émetteur de chaleur (2) placé dans l'une (1) des chambres et un corps poreux récepteur de chaleur (4), placé dans l'autre chambre (3), dans lequel on a dispersé un catalyseur, grâce à quoi, en mode de fonctionnement, le corps émetteur de chaleur (2) est chauffé par les gaz de combustion à haute température (6) qui le traversent et transmettent la chaleur au corps récepteur de chaleur (4) qui chauffe le mélange de gaz bruts qui le traversent, en forçant ces derniers à réagir, caractérisé en ce que la partie aval (4c) du corps récepteur de chaleur (4), dans le sens de l'écoulement du mélange de gaz bruts, renferme un matériau catalyseur réparti à l'intérieur et
en ce que la partie amont (4a, 4b) ne renferme aucun matériau catalyseur.

2. Un réacteur selon la revendication 1, caractérisé en ce que le corps récepteur de chaleur (4) est divisé en deux ou plusieurs couches (4a, 4b, 4c) dans le sens de l'écoulement du mélange de gaz bruts qui le traverse, en ce que, au moins la couche (4c), à l'extrémité aval du corps (4), renferme un catalyseur et en ce que la couche (4a), au niveau de l'extrémité amont du corps (4), ne renferme pas de catalyseur.
